# EUROPEAN PATENT SPECIFICATION

(11) **EP 1 521 153 B1**
(45) Date of publication and mention of the grant of the patent: **24.11.2010**
(21) Application number: 04023203.5
(22) Date of filing: 29.09.2004
(51) Int. Cl.: G05B 19/418

(54) **Wireless location based automated components**
Auf drahtloser Lokalisierung basierende automatisierte Komponenten
Composants automatisés localisés sans fil

(30) Priority: 30.09.2003 US 675535
(43) Date of publication of application: 06.04.2005
(60) Divisional application: 10003213.5
(73) Proprietor: Rockwell Automation Technologies, Inc., Mayfield Heights, OH 44124 (US)
(72) Inventor: Farchmin, David W., Grafton, WI 53024 (US)
(74) Representative: Grünecker, Kinkeldey, Stockmair & Schwanhäusser Anwaltssozietät

(56) References cited:
- WO-A2-2004/029739
- DE-A1- 10 129 567
- DE-A1- 10 142 279
- DE-A1- 19 509 836

## Description

The field of the invention is wireless location based systems in an automated industrial environment.

An exemplary automated manufacturing assembly typically includes a set of mechanical and electrical components, a controller and an interface device (e.g., a human-machine interface (HMI)). The mechanical and electrical components are integrated together to perform an automated manufacturing process. The controller is linked to a sub-set of the components (e.g., sensors) for receiving information regarding progression of the process and to another sub-set of the components (e.g., motors, actuators, etc.) for controlling progression of the process. The interface is typically linked to the controller to facilitate at least one of altering the process (i.e., altering process parameters) or monitoring the process.

While many different types of communication systems have been developed for linking the controller to the assembly components and to the interface, one particularly useful type of linkage is a network. communication system, the Ethernet being an example. In the case of the Ethernet, for instance, an interface generates messages earmarked for the controller and transmits those messages onto the network. The controller listens on the network for messages earmarked for the controller and uses those messages to perform specific functions. Similarly, the controller earmarks specific messages for the interface and transmits those messages to the interface via the network.

Recently wireless information systems have been developed that can, at least in part, provide machine and process visualization and information easily accessible from wireless mobile devices anywhere in a manufacturing facility, thereby providing increased functionality and information availability when and where required.. Here, wireless data systems have been developed for facilitating wireless communication between servers and wireless portable devices such as laptop computers and hand held computing devices that can be used as interface devices. In addition to the wireless devices, an exemplary wireless data system includes a plurality of access points, a network (e.g., an Ethernet) and software running on a network server. Each access point generally includes a receiver and a transmitter for receiving information from and transmitting information to wireless devices, respectively. The access points are typically spaced apart at regular intervals within an area in which communication is to be facilitated and are linked to the network server via the network. Proximate access points are tuned to receive signals on different channels (e.g., at different frequencies). The wireless devices are programmed to determine the closest access point via signal strength of received data and associate with the closest perceived access point. The devices transmit information to and receive information from the network server via the access points. Hereinafter access points configured to receive and transmit data will be referred to as communication points.

One particularly useful way to employ a wireless communication system is to provide location based information services. Here, for instance, when a wireless device is located in a specific location (e.g., proximate a specific automated assembly), information associated with that location (e.g., the automated assembly) may be automatically provided to the wireless device for perusal. As another instance, when a wireless device is located proximate a drill press assembly, information related to drill press operations or to facilitate control of the drill press (e.g., selectable control tool icons for controlling press operation) may be provided on a display screen for perusal or selection.

To facilitate location based services, the wireless information industry has developed systems for determining wireless device location. For instance, in some cases, the system server applies an algorithm to signals received from a wireless device to determine device location. Various time of flight, signal strength, statistical and other types of algorithms are known in the art and therefore are not described here in detail. In each of these cases the access points are typically modified in some manner to, in addition to receiving and transmitting data, facilitate generation of data required to determine wireless device location within the communicating area. For instance, in the case of a signal strength algorithm, the additional data generated may include signal strength data indicating the strength of signals received by the access point. Access points modified to provide location information will be referred to hereinafter as location enabled points to distinguish those access points from the communication points that do not provide information useable by a server to determine location.

While wireless location based information systems are useful and can support a whole host of valuable services, existing system architecture has several shortcomings. First, as indicated above, while at least some existing access points can be modified to render those points location enabled, the modification process is typically specific to each access point vendor and model and, in some cases, may be specific to software versions used on specific models making product deployment relatively expensive. Here, for instance, assuming fifty access point manufacturers where each manufacturer has just three different types of access points, rendering all different types of access points location enabled would require 150 different modification processes and more processes as the number of different access point types is increased over time.

In addition, it is believed that certain existing communication points may not be modifiable to facilitate location enablement and therefore may have to be replaced altogether when location determining capabilities are required. While modifying existing systems may not appear too burdensome at first blush, in reality, the task is daunting given the fact that wireless system deployment has been rapid and many sites already include huge legacy infrastructures that would have to be modified or replaced to facilitate location based functionality.

Second, often legacy communication access points are not optimally located to facilitate location determination. In this regard, for instance, in an automated facility, optimal location is often proximate an automated assembly (e.g., a machine line) so that relatively precise location with respect to the assembly can be identified. It is believed that this limitation on access point location (i.e., proximate assemblies) may be particularly important in the case of an automated facility that includes a large number of moving metallic components (e.g., presses, mills, transfer lines, etc.) that tend to reflect wireless signals thereby complicating the device locating task and algorithm. Not surprisingly, in many cases, legacy systems that include regularly spaced access points do not include an access point proximate each assembly in a facility.

Third, often the optimal number of access points for a communication system (i.e., data transmission and reception) and the optimal number for a location enabled system are different. In this regard, as well known in the wireless computing industry, there is a limit on the number of access points that can be included within a given space and that limit is related to channel conflict problems. For example, with IEEE 802.11b, there can be only three non-overlapping channels. Thus, no more than three access points linked to the same network can have active signal coverage of a location within an area without causing conflict problems. Adding a fourth access point to a network that covers an area covered by three other network access points causes channel conflict and has been known to reduce data transmission reliability.

It has also been recognized that location accuracy in a location enabled system is increased when the number of access points is increased (i.e., more points means more information for determining location). Thus, while a legacy wireless data system including a small number of access points may have a suitable access point arrangement to provide rough location information, in many applications such a rough location estimate is insufficient.

DE 195 09 836 A1 describes an information terminal system with a process control computer and a portable terminal device. The system comprises a component information memory means for storing information and for distinguishing each of the plurality of components of which the facility is made up. The system further comprises a component identification device for identifying a component from the plurality of components which is situated in a direction indicated by the portable terminal device by utilizing the information for distinguishing each of the plurality of components stored in the component information memory device.

DE 101 29 567 A1 discloses the use of a mobile phone or PDA as a human machine interface in an automation environment. Data received by a data processing device from the automation components may be analyzed with respect to the distance of the respective automation component from the location of the device.

DE 101 42 279 A1 describes an apparatus for monitoring at least one process including at least one portable data receiving device with an automatic position determination means. A central data processing device is described which has an interface with the portable data receiving device.

Post-published WO 2004/029739 A2 refers to a system and method for providing location based information in an automation environment.

It is the object of the present invention to provide an improved location determining assembly for use in an automated environment.

This object is solved by the subject matter of independent claim 1.

Preferred embodiments are defined in the dependent claims.

Hereinafter, unless indicated otherwise, a wireless computing or information device such as a palm computer, a laptop computer or other hand held computing devices will be referred to as a wireless information device (WID).

It has been recognized that wireless receiver devices are inexpensive to manufacture and to integrate with other electronic components. In addition, it has been recognized that, in the case of an automated industrial facility, many automated assemblies include some type of component that is already linked to the controller that is provided to control the automated assembly. For instance, in many cases a human-machine interface (HMI) is provided to enable a facility engineer to access assembly operating characteristics and settings monitored by the controller and to enable the engineer to alter settings when appropriate. As another example many systems include proximity sensors for sensing work piece position at assembly stations and providing position information to the controller. Moreover, it has been recognized that where a receiver is integrated into an assembly component that already includes a link to the controller, the link can be used for double duty to both perform the normal functions of the link and to also perform the function of providing WID location information to the controller.

Based on the above realizations, the invention provides for a receiver incorporated into an existing assembly component that performs a function that requires that the component be linked to an assembly controller so that the link can be used to facilitate the component function as well as to provide WID location information to the controller.

The HMI of the invention is a particularly advantageous component in which to locate the receiver. To this end, the HMI is usually juxtaposed with respect to an associated assembly to enable optimal assembly observation generally. Thus, in many cases, rules may specify that a location proximate or in front of an HMI is where access and control should be enabled. The receivers are located within controller linked HMIs.

One advantage of the invention is that, where additional receivers are required to facilitate sufficient location accuracy, the receivers can be located at optimal locations. More specifically, where receivers are integrated into HMIs, placement of the HMIs generally will ensure suitable if not optimal placement of the receivers.

Another advantage of the invention is that receivers can be added to systems for increasing location accuracy as the systems are constructed and without requiring additional steps to add the additional functionality. In this regard, as new automated assemblies are added to a facility, instead of adding conventional access points to increase WID location accuracy, one or more components including embedded receivers can be added to each assembly and commissioning can be performed in controller programming.

One additional advantage where receivers are embedded in existing assembly components is that existing access points that have been provided to facilitate communication with wireless devices needn't be altered in any way in order to enable location determination. To this end, in at least some embodiments it is contemplated that existing access points would operate in the same manner before and after embedded receivers are added to assembly components and all location determination would be based on signals obtained by the receivers and not on access point signals. Here, a company hired to render a facility location enabled would not have to worry about supporting all of the different types of access points on the market during commissioning and it is believed that overall commissioning costs would likely be reduced to the point of at least offset the costs associated with providing the embedded receivers.

Signals from communication access points may be used in conjunction with signals from embedded receivers to increase position accuracy or, in some cases, to provide a redundant system for collecting data. Here a subset of communication access points may be used to supplement embedded receivers where the number of embedded receivers within a specific region of a facility are insufficient for determining accuracy to a required degree. In other embodiments receivers that are not embedded in assembly components may be used to supplement embedded receivers where the number of embedded receivers within a specific region of a facility are insufficient for determining accuracy to a required degree.

The embedded receivers may serve double duty and be programmed to cooperate with the communication access points to facilitate reception of data from WIDs as well as to receive signals useable to determine location.

Instead of providing embedded receivers, embedded transponders (i.e., receiver/transmitter) may be included in a sub-set of the assembly components that are linked to the controller for some other purpose. In these cases, in addition to receiving signals from WIDs for determining location, the transponders can also be used to facilitate two way communication with WIDs.

The location or positioning engine and associated processor that uses signals from the receivers to determine location may be remotely located from the receivers while in other cases the processor may be integrated into one of the components that includes a receiver. Thus, for instance, in some cases the processor including the positioning engine, the receiver and the automated assembly component may be integrated.

In some cases components may include receiver ports for receiving signals from a wireless antenna where the antenna are configured to receive signals from a WID. Here, software may be included in the component to identify received WID signals and to process those signals in an appropriate manner to facilitate location determination. Here an add on antenna may be added to the component via a connecting cable or other type of link. In this case, an antenna may be added to an existing component and the antenna may be placed in a particularly advantageous position (e.g., at a relatively high location with relatively unobstructed lines of sight in many directions) for signal reception.

### BRIEF DESCRIPTION OF THE SEVERAL VIEWS OF THE DRAWINGS

The invention will hereafter be described with reference to the accompanying drawings, wherein like reference numerals denote like elements, and:

Fig. 1 is a schematic diagram illustrating an exemplary automated manufacturing facility including both communication access points and receiver equipped human/machine interfaces;

Fig. 2a is a perspective view of an exemplary wireless information device usable within a facility configured according to the present invention;

Fig. 2b is a schematic diagram illustrating various components of the wireless information device of Fig. 2a;

Fig. 3a is a perspective view of an exemplary human/machine interface including a transceiver according to certain aspects of the present invention;

Fig. 3b is a schematic diagram illustrating various components of the human/machine interface of Fig. 3a;

Fig. 4 is an illustration of an exemplary automated assembly including an HMI equipped to receive wireless information device signals;

Fig. 5 is a perspective view of a position sensor assembly including a wireless receiver;

Fig. 6 is a flow chart illustrating one method according to the present invention;

Fig. 7 is a flow chart illustrating a sub-method which may be added to the method of Fig. 6 according to one aspect of the present invention;

Fig. 8 is a perspective view of an HMI and a separate wireless receiver assembly according to one aspect of the present invention; and

Fig. 9 is a perspective view of the HMI and receiver assembly of Fig 8 installed on an exemplary automated assembly.

### DETAILED DESCRIPTION OF THE INVENTION

One or more specific embodiments of the present invention will be described below. It should be appreciated that in the development of any such actual implementation, as in any engineering or design project, numerous implementation-specific decisions must be made to achieve the developers' specific goals, such as compliance with system-related and business related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

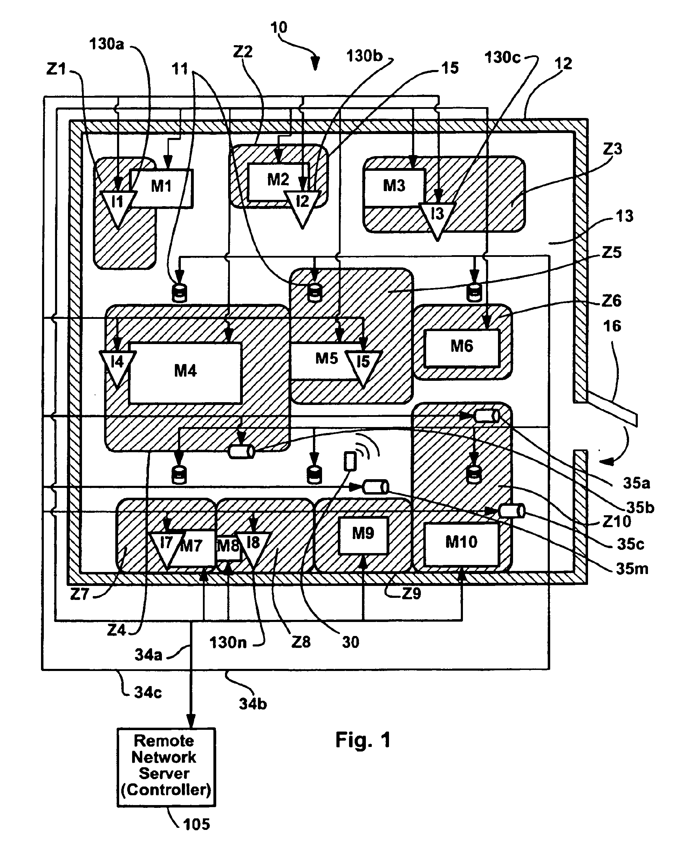

Referring now to the drawings wherein like reference numbers correspond to similar elements throughout the several views and, more specifically, referring to Fig. 1, the present invention will be described in the context of an exemplary, albeit simplified, manufacturing facility 10 that includes a rectilinear facility floor space or area 13 confined by four facility walls collectively identified by numeral 12. In the exemplary facility 10, entire area 13 comprises a single room (i.e., there are no wall partitions within facility 10 and all of the facility resides on a single level). A doorway 16 is provided to allow access to area 14.

As illustrated in Fig. 1, exemplary facility 10 includes ten separate automated assemblies identified by labels M1 through M10. The exemplary automated assemblies M1 through M10 may include any type of manufacturing assembly such as a mill, a drill, a transfer line, a laser cutting device, a vision system, any of several different types of robots, clamps, etc., or any combination of cooperating components. The automated assemblies M1 through M10 are shown as being different sizes to visually illustrate that the automated assemblies may have different physical footprints. For example, assembly M4 is illustrated as having a much larger physical footprint than assembly M8. In general, automated assemblies M1-M10 are spaced out within area 13 although, in some cases, automated assemblies may be positioned directly next to each other such as, for instance, assemblies M7 and M8.

It is contemplated that each of automated assemblies M1-M10 includes at least one and, in many cases, a plurality of sensing devices (not illustrated) that sense assembly operating characteristics and provide signals that can be used to facilitate assembly monitoring via an interface (i.e., a WID). For instance, in the case of a drilling assembly, sensors may include limit switches that are tripped when a drill slide reaches various positions along a travel path, on/off switches, speed sensing switches, motor operating characteristic sensors, etc. It is also contemplated that most if not all of assemblies M1-M10 will include a plurality of actuators for causing the assembly components to perform assembly functions.

In addition to including sensing devices and actuators, it is contemplated that most, if not all, of automated assemblies M1-M10 will include some type of control interface to facilitate control and control adjustment. For example, again, in the case of a drilling assembly, drill slide stroke length may be altered, drill speed may be altered, the angle at which a drill bit enters a work piece may be altered, etc. In Fig. 1 human-machine interfaces are referred to by labels I1 through I8 where HMIs are shown next to assemblies that the HMIs are associated with. For instance, HMI I1 is associated with assembly M1, HMI I2 is associated with assembly M2, and so on. Some of the interfaces are also labeled with numeral 130 followed by a small case letter (e.g., a. b, etc.) to distinguish different instances of the interfaces. Specifically, HMIs I1-I4 are also labeled 130a, 103b, 130c and 130d, respectively.

In addition to the components described above, facility 10 also includes a plurality of communication access points 11 (only two numbered), a network server/controller 105, a plurality of wireless receivers 35a, 35b, 35c and 35m, at least one wireless information device (WID) 30 and a plurality of two-way data buses 34a, 34b and 34c (e.g., LAN, Ethernet, etc.) linked to controller 105 that form a network..

Controller 105 may be positioned within facility 10 or may be located at some remote location such as, for instance, in a separate building, in a separate room within the facility that includes area 13 or at a completely different location such as a remote campus associated with facility 10. In Fig. 1, controller 105 is typically linked to at least some components in each of automated assemblies M1-M10 via two-way data bus 34a that allows controller 105 to monitor assembly operating characteristics as well as control assembly operation. For instance, in some cases controller 105 may be linked via an Ethernet connection 34a to a proximity sensor that is part of assembly M1 and to an actuator that is part of assembly M3, and so on.

Controller 105 is typically a processor based workstation capable of running various types of computer programs. For instance, some programs are assembly control programs that enable controller 105 to either separately control each assembly M1-M10 or, safely and precisely, sequence assembly operation thereby allowing relatively complex manufacturing processes to be performed in an efficient manner. In addition, other controller programs may allow controller 105 to derive various assembly operating characteristics from monitored or sensed characteristics (e.g., motor voltage and current data is useful to derive stator and rotor resistance estimates, system inductances, identify harmonics, determine system torques, etc.) and to run complex algorithms to identify operating trends, alarm conditions, potentially hazardous conditions, maintenance requirements, raw material requirements and so on. Moreover, controller 105 also runs programs that facilitate data management and warehousing so that subsequent algorithms may be applied to warehoused data to identify historical operating patterns for various purposes. Furthermore, when potentially hazardous conditions occur, controller 105 may be programmed to cause the automated assemblies M1 - M10 to assume non-hazardous operating conditions (e.g., a reduced set of operations or, in some cases, a state in which all mechanical components are parked).

Controller 105 may also run programs designed to facilitate interfacing with facility operators (e.g., maintenance personnel, process engineers, etc.) thereby providing control capabilities and system monitoring capabilities. To this end, controller 105 may include its own input and output interfacing devices such as a display screen, a keyboard, a pointing and selecting device such as a mouse or trackball or any other types of interfacing devices known in the art.

In the present example it is assumed that each of HMIs I1 -I8 also facilitates interfacing with facility operators thereby providing at least some level of control and system monitoring. To this end, HMIs I1 - I8 are linked to controller 105 via network 101 and a data bus 34c so that monitored information can be shared therebetween and so that some level of proximate control can be accessed near at least a sub-set of the assemblies. Thus, for instance, controller 105 may monitor all operating characteristics of assembly M1 and may publish data related thereto for access by HMI I1 so that interface I1 needn't separately monitor the same information. Similarly, controller 105 may perform some information analysis and publish the results for use by interface 130a. In addition, because HMIs I1-I8 are linked to controller 105 and controller 105 controls assemblies M1 - M10, each HMI I1 - I8 can also be used to control an associated assembly via bus 34c, controller 105 and bus 34a. While at least some HMIs may be linked directly to associated assemblies M1 - M10 for monitoring and control purposes, hereinafter it will be assumed that each HMI I1 -I8 accesses data and facilitates control via controller 105.

In addition to HMIs I1-I8, receivers 35a - 35m are also linked to data bus 34c. Each receiver 35a - 35m is a wireless receiver and, in at least some embodiments, is incapable of wirelessly transmitting information. In some embodiments receivers 35a - 35m simply receive wireless information and provide that information to some other processor linked to bus 34c or to controller 105. In other embodiments receivers 35a - 35m determine a single characteristic of wirelessly received information and provide that characteristic value to other linked components. For instance, in some cases receivers 35a - 35m may simply determine signal strength of received signals and provide that information on bus 34c along with a tag indicating the receiver that generated the signal strength information.

Referring still to Fig. 1, each communication access point 11 includes a two-way wireless transceiver that, as well known in the computer arts, is capable of transmitting and receiving electromagnetic (e.g., radio or infrared) signals within an area proximate the transceiver. Wireless transceivers like access points 11 are well known in the industry and therefore, in the interest of simplifying this explanation, will not be described here in detail. For the purposes of the present invention, it should suffice to say that each transceiver 11 transmits information signals which decrease in strength as distance from the transceiver increases. In the illustrated example, six separate access points 11 are provided within area 13 and are generally equi-spaced within area 13. Typically, access points 11 will be mounted on the ceiling within an area 13 to allow relatively unobstructed communication between an access point 11 and other devices that communicate therewith. While access points 11 are illustrated as being substantially equi-spaced within area 13, it should be appreciated that other access point arrangements are contemplated and that, in many cases, other access point arrangements may be most suitable given specific assembly layouts, the physical characteristics of each assembly and assembly zone layouts (described below).

Controller 105 is linked to each access point 11 via two-way data bus 34b that allows controller 105 to receive information from the access points 11 and also allows controller 105 to provide information to each of the access points 11 for transmission within area 13 to WIDs or the like within area 13. Information transmitted from each access point 11 to controller 105 is typically tagged by the access point so that controller 105 can determine which access point 11 provided the received information. This tagging may either be performed by the access point 11 earmarking data packets with an access point identifier (e.g., an access point number) or, in the alternative, may be facilitated by simply providing separate hardwires from each of the access points 11 to the controller 105. In a similar fashion, controller 105 and access points 11 are configured such that controller 105 can address information to each separate and specific access point 11.

Referring still to Fig. 1, according to at least one embodiment of the present invention, sub-spaces within area 13 are earmarked or identified as assembly zones or locations associated with each of the separate automated assemblies M1-M10 wherein, when a WID 30 (i.e., a person carrying a WID) is within the zone, some process is performed. The exemplary different zones Z1 through Z10 in Fig. 1 are identified by hatched rectilinear blocks. For instance, a space identified by label Z1 includes a relatively small region adjacent one end of assembly M1 that is specifically associated with assembly M1, space Z1 referred to hereinafter as an assembly zone associated with assembly M 1.

Although not illustrated, in some cases, no assembly zones may be specified for one or more of the facility automated assemblies. Moreover, some zones that are associated with specific automated assemblies may not be immediately adjacent the associated automated assemblies but instead may be separated from the associated automated assemblies. Some zones may include all or a part of other zones and more than one zone may be associated with some of the assemblies.

The present invention contemplates several different types of zones including, but not limited to, information access zones, assembly control zones, restricted safety zones, hysteretic zones, etc. Here, an access zone is a zone in which a facility employee may access information related to a specific assembly via a WID located within the zone. For instance, when an employee is within zone Z1, the employee may use a WID to access information related to operations of assembly M1, when in zone Z4, and employee may access information related to assembly M4 and so on.

A control zone is a zone in which an employee is able to control an associated assembly. For instance, when an employee is within zone Z1, the employee may be able to control assembly M1 via a WID, when in zone Z5, an employee may be able to control assembly M5 via a WID, and so on.

A restricted safety zone is a zone wherein, when a person is located within the zone, assembly operations may be restricted for safety purposes. For instance, when a person is within zone Z1, assembly M1 may be completely shut down or may be operated in some restricted fashion.

A hysteretic zone is a zone typically associated with one of the other types of zones described above wherein, after being in one of the other zones, the access, control or restriction associated with the other zone is maintained until a WID is removed from the hysteretic zone. Thus, for instance, where a person was previously in zone Z1 and has therefore established access to information related to assembly M1, until the WID associated with the person is removed from a larger zone (not illustrated) than zone Z1, the access capabilities remain associated with the WID.

In some cases a sub-set or even all of the zone types described above may be specified for each of the facility assemblies M1 - M10. In addition, in some cases the zones and functionality associated with the zones may also be dependent on secondary criteria. For instance, access zone size and functions may be different for a maintenance engineer than for a facility manager. As another instance control zone size and functions may be different depending on time of day.

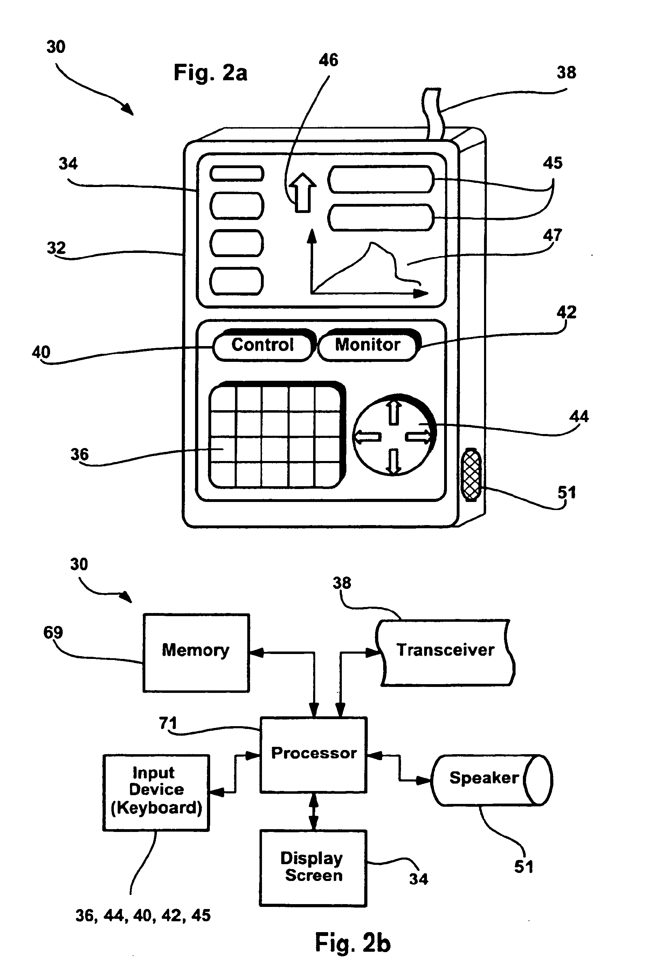

Referring now to Figs. 2a and 2b, a first relatively simple exemplary WID 30 is illustrated. Exemplary WID 30 includes, generally, a plurality of components that are mounted within a hardened plastic or metallic housing identified by numeral 32. WID 30 components include a processor 71, an input device (e.g., keyboard 36), a display screen 34, a speaker 51 for audio output, a transceiver 38 and a memory 69. Processor 71 is linked to each of the input device, display screen 34, speaker 51, transceiver 38 and memory 69 for communication therewith. Processor 71 is equipped to run various programs for both displaying information via screen 34 and for receiving control signals and communicating those control signals to access points 11 (see again Fig. 1) via transceiver 38.

The input device may include any of several different types of input components including a typical push-button keyboard 36, separate selection buttons 40 and 42, a rocker-type selection button 44, and/or selectable icons that may be provided via display screen 34 such as, for instance, icons 45. It is contemplated that, in at least one embodiment, a pointing cursor 46 may be movable about screen 34 and placed over one of the selectable icons (e.g., 45) after which a conventional type mouse clicking action may be used to select one of the icons to cause some display or control function to occur. In other embodiments display 34 may comprise a touch screen where icons are selectable via a stylus or the tip of an operators finger.

Display screen 34 may be any type of conventional display screen suitable for a handheld device and, for example, may be equipped to display numeric information, icons, graphs such as graph 47, bar charts, or any other type of monitoring and control information that may be associated with facility machines. Speaker 51 is a conventional small audio output speaker which may be used for any purpose such as providing an audible indication when a WID 30 is removed from a zone, providing operating characteristics in an audible manner, etc.

Transceiver 38 is mounted proximate the top end of housing 32. As in the case of the transceivers that comprise access points 11, transceiver 38 is capable of transmitting electromagnetic signals and also receiving such signals so that information can be provided to controller 105 or received from controller 105 via access points 11.

Memory 69 stores the programs performed by processor 71 and also, in at least some embodiments of the invention, stores a WID identifier (e.g., a WID number, a WID user identification number, etc.). It is contemplated that some WIDs 30 may only be configured to provide access information and, in this case, the programs stored in memory 69 may only be access type programs. Where a WID 30 is equipped with control capabilities, control programs are stored in memory 69.

Referring once again to Fig. 1, herein it will be assumed that each of HMIs I1-I8 has a similar hardware configuration and therefore, in the interest of simplifying this explanation, only HMI I1, also labeled 130a, will be described here in detail. Nevertheless, it should be recognized that, in at least some cases, the HMIs provided within a facility will have different hardware configurations, the configuration characteristics, in general, depending upon the types of assemblies being monitored and controlled via the interface. In addition, it should be appreciated that, while many of the HMIs will have similar hardware configurations, in most cases, the software run by the HMIs will have differences, the differences depending on the types of assemblies being controlled and monitored via the specific HMI.

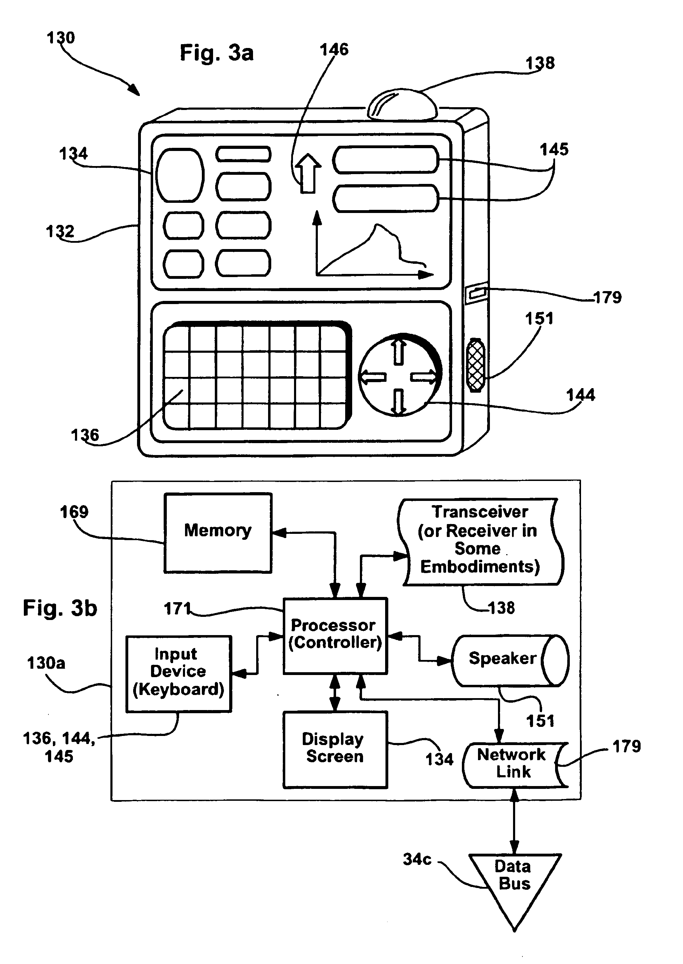

Referring now to Figs. 3a and 3b, an exemplary HMI 30a and its internal components are illustrated. Referring also to Figs. 2a and 2b, it should be appreciated that exemplary HMI 130a has a hardware configuration that resembles the WID 30 hardware configuration described above. Because of the similarity between many of the components in the HMI 130a and the WID 30, detailed descriptions of the similar components are not repeated here. In this regard, it should suffice to say here that HMI 130a includes a rigid plastic or metallic housing 132 in which various components are mounted including a processor 171, input devices including a key board 136 and a rocker type cursor control button 144, a display screen 134, a speaker 151, a transceiver 138 and a memory 169, wherein the input components 136 and 144, screen 134, transceiver 138, speaker 151, memory 169 and processor 171 resemble similar components in WID 30. In addition, on screen functionality such as on-screen cursor selectable icons 145 and a movable cursor 146 illustrated in Fig. 3a are similar to the on-screen functionality described above with respect to WID 30.

Importantly, referring again to Figs. 3a and 3b, HMI 130a includes a connector 179 (eg: RJ-45 or other) allowing connection to a network link. As its label implies connector 179 is linkable to data bus 34c as best illustrated in Figs. 1 and 3b so that HMI 130a can communicate with controller 105 to provide information there to and receive information therefrom.

Referring still to Fig. 1, each of the other HMIs 130b, 130c, 130n, etc., is also linked to data bus 34c for communicating with controller 105. Moreover, each of receivers 35a, 35b, 35m, etc., is linked to data bus 34c to provide information to controller 105. As indicated above, because each of the HMIs and receivers is linked to data bus 34c, each of the HMIs is also linked to each of the other HMIs as well as to each of the receivers.

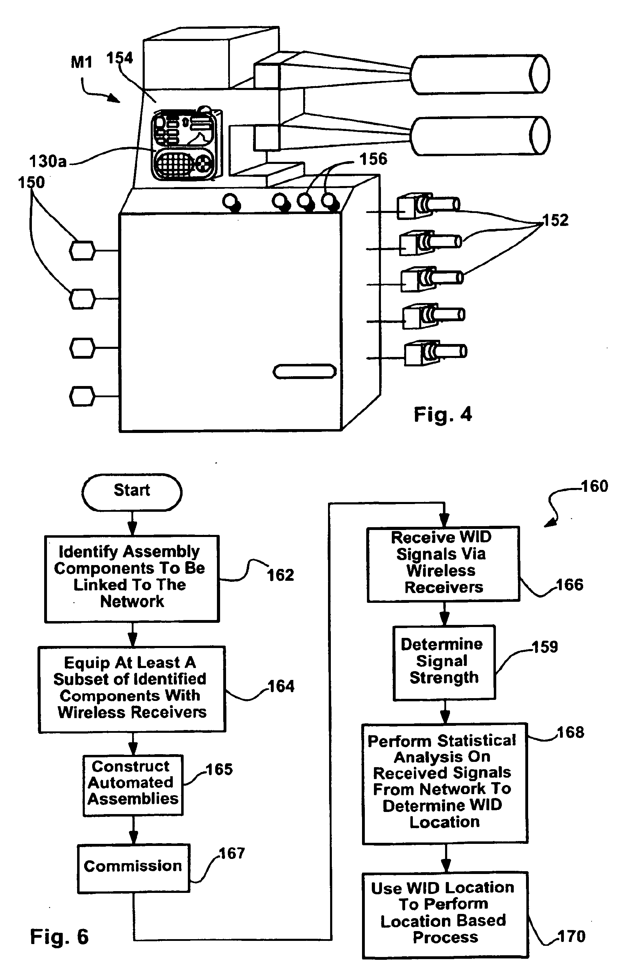

Referring once again to Fig. 1 and also to Fig. 4, exemplary automated assembly M1 is illustrated which, in addition to including several different mechanical components for performing an automated function or functions, includes a plurality of actuators, two of which are collectively identified by numeral 150, a plurality of sensors, three of which are collectively identified by numeral 152 and a plurality of dedicated control panel buttons, two of which are collectively identified by numeral 156. Typically, each assembly M1-M10 will include at least one and, in some cases, several different flat surfaces proximate the assembly components that are suitable for mounting an HMI. In most cases, one surface will be particularly suitable for mounting an HMI because of its height (e.g., a height comfortable for most facility employees to use) and its relative juxtaposition with respect to the assembly components that perform the automated functions. An exemplary suitable mounting surface is identified in Fig. 4 by numeral 154. HMI 130a is mounted to mounting surface 154 such that screen 134 (see again Fig. 3a) is easily observable and input devices 136 and 144 (see again Fig. 3a) are readily accessible. Prior to mounting HMI 130a to surface 154 or thereafter, connector 179 is connected to data bus 34c.

Referring still to Figs. 1 and 4, consistent with the comments above, actuators 150 and sensors 152 are linked to controller 105 via data bus 34a and network 101. Thus, to access information related to sensors 152, interface 130a accesses, that information via data bus 34c, and controller 105 where controller 105 obtains the information via bus 34a. To control any of actuators 150, interface 130a affects control via data bus 34c, and controller 105 wherein control commands are processed by controller 105 and used to control the actuators 150 via data bus 34a. Here it should be appreciated that the distinction between network buses 34a-34c may be a fiction in certain applications as all linkages to HMIs access points and other assembly components may be over a single network. The fiction of different network branches has been adopted here to clearly show that the interface system includes at least some receivers (e.g., receivers embedded in the HMIs) that are distinct from the access point transceivers.

Referring once again to Fig. 1, according to at least some embodiments of the present invention, controller 105 cooperates with access points 11 to communicate with WID 30 when WID 30 is within space 13. In addition, in at least some embodiments of the invention, HMIs I1-I8, receivers 35a-35m and controller 105 cooperate to determine WID 30 location within space 13 and, more specifically, to determine when WID 30 is located within one of the assembly zones Z1-Z10 associated with assemblies M1-M10, respectively. Thus, in at least one embodiment of the invention, when WID 30 is turned on within space 13, WID 30 transmits signals of a known signal strength within space 13. Referring also to Figs. 3a and 3b, each HMI I1-I8 monitors space 13 for transmitted WID signals. When a WID signal is received by an HMI (e.g., I1) the HMI determines signal strength of the received signal and provides signal strength information via bus 34c to controller 105. Controller 105 uses the received signal strength data from the HMIs to generate a location estimate for the transmitting WID 30. In at least some embodiment, WID location is determined by performing a statistical analysis on the received data.

Once WID location has been estimated, controller 105 then performs some function associated with WID location. For example, in some cases, controller 105 may transmit assembly data via one of the access points 11 to a proximate WID 30 when WID 30 is within a zone associated with a specific assembly. More specifically, when WID 30 is in zone Z4, controller 105 may transmit assembly information via one of access points 11 to WID 30 corresponding to assembly M4. When data is received by WID 30, WID 30 may be programmed to automatically display the data in some intuitive fashion via screen 34 (see again Fig. 2a). As another example, when WID 30 is within zone Z4, controller 105 may transmit information via one of access points 11 to WID 30 thereby causing WID 30 to provide selectable control icons (e.g., 45 in Fig. 2a) on screen 34 for controlling machine M4. As yet one other example, when WID 30 is in zone Z4, controller 105 may automatically alter assembly M4 operations to minimize the possibility of injury to the person located within zone Z4.

In other embodiments, after controller 105 determines WID 30 location, controller 105 may communicate with the WID 30 via one of the HMI transceivers 138 instead of via access points 11. Thus, for instance, where controller 105 estimates that WID 30 is directly in front of HMI I1, controller 105 may transmit information to WID 30 via the transceiver 138 that comprises part of HMI I1.

In some cases, the location or position determining engine/software may be included in one of the HMI memories 169 so that the linked HMI processor 171 can perform the location determining algorithm. For example, referring once again to Fig. 1, the position engine software may be stored in the memory 169 associated with HMI 130a. Here, WID signal strength data from each of HMIs I2-I8 would be obtained by HMI l1 and used by the processor 171 in HMI I1 to determine WID 30 location. After WID 30 location is determined, that information may then be provided to controller 105 which would in turn perform the related access, control or safety function.

While the number of and distribution of receiver equipped HMIs within a typical automated facility will often be sufficient in most facility areas to accurately determine WID location, it has been recognized that, in at least some cases, there may be areas where the number of receives or the arrangement of those receivers will be insufficient for the purpose of accurately determining WID location. Where the number of receiver equipped interfaces is insufficient for accurately determining WID location, three options are contemplated by the present invention. First, referring once again to Fig. 1, simple receiver devices like receivers 35a through 35m may be spaced apart within the facility in regions that do not include a sufficient number of receiver equipped HMIs. In Fig. 1, for instance, while most of the assemblies illustrated have associated HMIs, assemblies M6, M9 and M10 do not have associated HMIs. Assemblies M6, M9 and M10 are clustered within one area of larger space 13 and, as illustrated, no HMIs are provided within the general area. As illustrated, receivers 35a-35m have been located within the general area corresponding to assemblies M6, M9 and M10. The positioning of receivers 35a-35m would be chosen to facilitate accurate location determination.

A second option that may be employed when the number or relative juxtaposition of receiver equipped HMIs is insufficient within an area to accurately determine WID location is to employ an existing communication access points 11 to obtain additional signal strength information. While this option is possible, as explained above, this option is not typically optimal as, in many cases, additional programming of existing access points would have to be performed to facilitate this option. While reprogramming may not appear too burdensome at first blush, upon a more detailed analysis of the required reprogramming process, the burden can be seen as excessive where a company charged with the reprogramming process would have to support tens of if not hundreds of different types of reprogramming efforts due to a lack of specific industry standards regarding access point software. In this regard, where reprogramming is an option, it should be appreciated that the amount of data available for a WID location determination may be increased appreciably by reprogramming all facility communication access points.

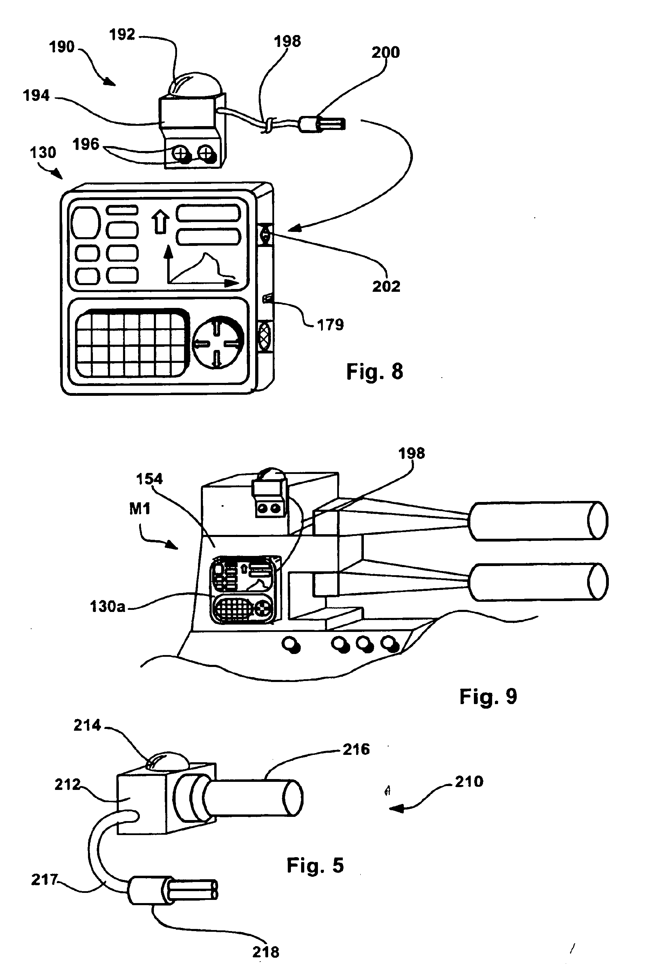

A third option for obtaining additional WID signal strength data in areas where an insufficient number of receiver equipped HMIs are present is to identify other assembly components within the areas that are ready to be linked to one of the network data buses and equip that component with a wireless receiver. To this end, referring to Fig. 5, an exemplary receiver equipped proximity sensor assembly 210 is illustrated. Exemplary assembly 210 includes a hardened plastic or metallic housing structure 212, a sensor unit 216 that extends from housing structure 212, a wireless receiver 214 and a cable 217 that terminates at a network link 218. Here, assembly 210 would be installed in a normal fashion during an assembly building procedure. In addition, assembly 210 would be linked to one of the network data buses 34a-34c in a normal fashion. Then during a commissioning procedure for determining WID location, the specific location of receiver 214 would be identified and used to program the position engine software.

Referring now to Fig. 6, an exemplary method 160 according to the present invention is illustrated. The method begins at block 162 where assembly components to be linked to the system network are identified. Specifically, in at least some embodiments of the invention, the identified assembly components may be HMIs I1-I8. At block 164, the identified assembly components or, at least a subset thereof, are equipped with wireless receivers as illustrated in Figs. 3a and 3b. Continuing, at block 165, the automated assemblies within a facility are constructed in the usual fashion. Here, in the present example, HMIs I1-I8 would be mounted to mounting surfaces (e.g., 154) and linked to the network data buses 34c in the usual fashion. After block 165, at block 167 a commissioning procedure is performed to generate subsets of signal strength data associated with specific WID locations within the facility. Commissioning procedures for wireless type commissioning type engines are well known in the wireless communication art and therefore will not be described here in detail.

Referring still to Figs. 1 and 6, at block 166, during normal operation of the inventive system, when a WID 30 is turned on inside space 13, the WID 30 transmits signals of a known signal strength which are received by the transceivers 138 (see again Fig. 3a) that comprise part of each of the HMIs I1-I8. At block 159 each HMI determines the strength of the WID signal received and provides the strength data along with an indication of which HMI received the signal to the processor or controller that runs the position engine software. Thus, in some cases the strength and receiving HMI data will be provided to controller 105 where controller 105 performs the position determining algorithm and, the other cases, the signal strength and receiving HMI data will be provided to one of the HMIs where the HMI performs the location determining process.

Continuing, at block 168, the HMI processor or controller 105 that performs the position determining process uses the received strength and receiving HMI information to estimate the WID location. In addition, where one of the HMI processors performed the location determining process, at block 168 that processor provides the WID location estimate to controller 105. At block 170, controller 105 performs an access, a control or a safety function as a function of the WID location estimate.

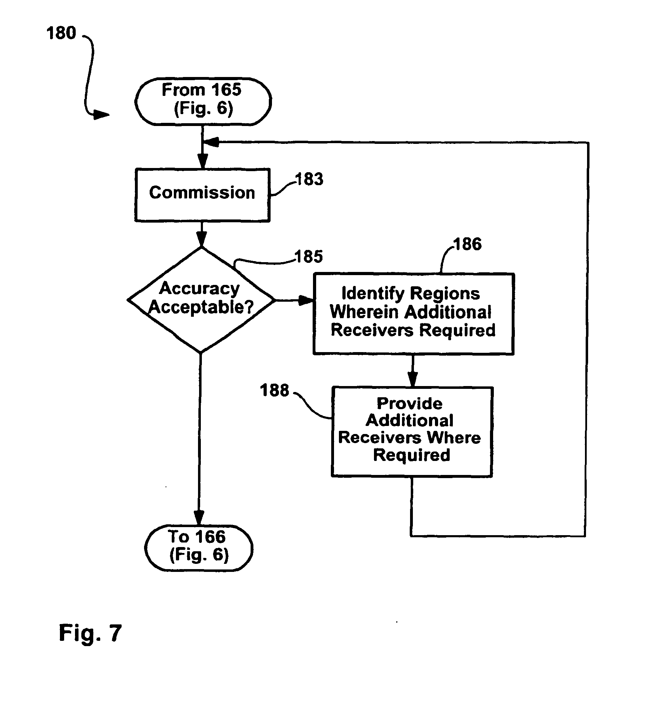

Referring now to Fig. 7, a sub-method 180 which may be added to method 160 of Fig. 6 for dealing with situations wherein, after construction, the number and arrangement of receivers within specific facility areas is insufficient, is illustrated. Referring also to Figs. 1 and 6, after assembly components to be linked to the network have been identified and at least a subset of those components have been equipped with wireless receivers and after the automated assemblies and communication network have been constructed, control passes from block 165 in Fig. 6 to block 183 in Fig. 7. At block 183, a commissioning procedure for commissioning the position engine software is performed. At block 185, after the commissioning procedure has been performed tests are performed within facility space 13 to determine how accurately the position engine performs when a WID 30 is located in different areas within space 13. To this end, according to at least one process for determining whether or not accuracy is acceptable, a WID 30 is moved about space 13 to known locations and the results of the position engine process are compared to the known locations. Where accuracy is acceptable throughout space 13, control passes from block 185 back to block 166 in Fig. 6. However, where accuracy is not acceptable in some area within space 13, control passes from block 185 to block 186.

At block 186, the regions where accuracy was not acceptable are identified as regions wherein additional receives are required. At block 188 additional receivers are provide in the identified regions. Here, consistent with the comments above, the additional receivers may be provide by, either, providing separate and dedicated additional receivers, reprogramming at least some communication access points (e.g., 11 in Fig. 1) within the area to generate WID signal strength data or by equipping other automated assembly components that are within the region and that are already linked to the network data buses with receivers. After block 188, control passes back to commissioning block 183.

Referring once again to Fig. 4, while an optimal mounting surface (e.g., 154) for an HMI may be provided via an automated assembly M1, in some cases, the optimal mounting surface 154 may not correspond to an optimal location for the receiver or antenna unit associated with the HMI. Thus, according to at least one additional aspect of the present invention, in some cases a separate antenna may be provided which can optionally be linked to an HMI via a flexible cable or the like such that the antenna can be optimally positioned. To this end, referring to Fig. 8, an exemplary HMI 130a with an optional antenna attachment 190 is illustrated. HMI 130a in Fig. 8 is identical to the HMI 130a described above with respect to Fig. 3a except that the HMI in Fig. 8 does not include an embedded receiver and instead includes a female receiver port 202. The antenna assembly 190 includes a rigid plastic or metallic housing member 194, an antenna 192 extending from the top of housing 194, an assembly cable 198, a male plug 200 configured to be receivable within female port 202 and some type of attachment mechanism (e.g., screws 196) for attaching assembly 190 to some automated assembly component.

Referring also to Fig. 9, after HMI 130a is secured to mounting surface 154, where receiver functionality is required, antenna assembly 190 is mounted in an optimal location relatively proximate HMI 130a and is attached to port 202 via cable 198. The process of determining the magnitude of the signal received by the antenna assembly 190 would, in at least some embodiments, be performed by the HMI processor 171 (see again Fig. 3b).

While the invention may be susceptible to various modifications and alternative forms, specific embodiments have been shown by way of example in the drawings and have been described in detail herein. However, it should be understood that the invention is not intended to be limited to the particular forms disclosed. For example, while the invention is described in the context of access points and receivers that transmit data packets including signal strength and indicators of the access points that received the WID signals, the invention is applicable in other systems such as systems with receive only access points where the WIDs transmit time stamped signals of known signal strength to the receivers and the times stamps are used to correlate measured signal strengths for positioning.

## Claims

1. A location determining assembly for use in an automated environment (10), the location determining assembly including at least a first automated assembly (M1) including components that facilitate an automated process, at least one portable wireless information device (30) and a controller (105) for controlling the first automated assembly (M1), the first automated assembly (M1) comprising:
a first human-machine interface (130a) associated with and juxtaposed with respect to the first automated assembly (M1) and linked to the controller (105) via a communication network (34c) for at least one of providing information thereto and receiving information therefrom, the first human-machine interface (130a) including a first wireless receiver (35) for receiving wireless signals from the at least one portable wireless information device (30); and
a processor (171) for receiving signals from the first wireless receiver (35), said signals depending on the wireless signals received by the first wireless receiver (35), and running location determining software for determining the location of the at least one portable wireless information device (30) as function of the signal strength or the time of flight of the signals received by the first wireless receiver (35).

2. The assembly of claim 1 wherein the automated environment (10) further includes at least a second automated assembly (M2) controlled by the controller (105) and wherein the second automated assembly (M2) further includes a second human-machine interface (130b) associated with and juxtaposed with respect to the second automated assembly (M2) and linked to the controller (105) to at least one of provide information thereto and receive information therefrom, the second human-machine interface (130b) including a second wireless receiver (35) for receiving wireless signals from the at least one portable wireless information device (30), the processor receiving signals from each of the first and second wireless receivers (35), said signals depending on the wireless signals received by the first and second wireless receivers (35), and determining portable wireless information device location as a function of the signal strength or the time of flight of the signals received by the first and second wireless receivers (35).

3. The assembly of claim 2 wherein the processor (171) is embedded within the first human-machine interface (130a).

## Patentansprüche

1. Ortsbestimmungsbaugruppe zur Verwendung in einer automatisierten Umgebung (10), wobei die Ortsbestimmungsbaugruppe mindestens eine erste automatisierte Baugruppe (M1) mit Komponenten, die einen automatisierten Prozess ermöglichen, mindestens eine tragbare drahtlose Informationseinrichtung (30) und eine Steuerung (105) zum Steuern der ersten automatisierten Baugruppe (M1) umfasst, wobei die erste automatisierte Baugruppe (M1) Folgendes umfasst:
eine erste Mensch-Maschine-Schnittstelle (130a), die mit der ersten automatisierten Baugruppe (M1) assoziiert und mit Bezug auf diese nebeneinander gestellt ist und über ein Kommunikationsnetz (34c) mit der Steuerung (105) verbunden ist, um dieser Informationen zuzuführen und/oder Informationen von dieser zu empfangen, wobei die erste Mensch-Maschine-Schnittstelle (130a) einen ersten drahtlosen Empfänger (35) zum Empfangen von drahtlosen Signalen von der mindestens einen tragbaren drahtlosen Informationseinrichtung (30) aufweist; und
einen Prozessor (171) zum Empfangen von Signalen von dem ersten drahtlosen Empfänger (35); wobei die Signale von den durch den ersten drahtlosen Empfänger (35) empfangenen drahtlosen Signalen abhängen, und zum Ausführen von Ortsbestimmungssoftware zum Bestimmen des Orts der mindestens einen tragbaren drahtlosen Informationseinrichtung (30) als Funktion der Signalstärke oder der Laufzeit der durch den ersten drahtlosen Empfänger (35) empfangenen Signale.

2. Baugruppe nach Anspruch 1, wobei die automatisierte Umgebung (10) ferner mindestens eine durch die Steuerung (105) gesteuerte zweite automatisierte Baugruppe (M2) aufweist und wobei die zweite automatisierte Baugruppe (M2) ferner eine zweite Mensch-Maschine-Schnittstelle (130b) aufweist, die mit der zweiten automatisierten Baugruppe (M2) assoziiert und mit Bezug auf diese nebeneinander gestellt ist und mit der Steuerung (105) verbunden ist, um dieser Informationen zuzuführen und/oder Informationen von dieser zu empfangen, wobei die zweite Mensch-Maschine-Schnittstelle (130b) einen zweiten drahtlosen Empfänger (35) zum Empfangen von drahtlosen Signalen von der mindestens einen tragbaren drahtlosen Informationseinrichtung (30) aufweist, wobei der Prozessor Signale jeweils von dem ersten und dem zweiten drahtlosen Empfänger (35) empfängt, wobei die Signale von den durch den ersten und zweiten drahtlosen Empfänger (35) empfangenen drahtlosen Signalen abhängen, und zum Bestimmen des Orts der tragbaren drahtlosen Informationseinrichtung als Funktion der Signalstärke oder der Laufzeit der durch den ersten und zweiten drahtlosen Empfänger (35) empfangenen Signale.

3. Baugruppe nach Anspruch 2, wobei der Prozessor (171) in die erste Mensch-Maschine-Schnittstelle (130a) eingebettet ist.

## Revendications

1. Ensemble de détermination de localisation destiné à être utilisé dans un environnement automatisé (10), l'ensemble de détermination de localisation comprenant au moins un premier ensemble automatisé (M1) comprenant des composants qui facilitent un processus automatisé, au moins un dispositif d'information sans fil portable (30) et une unité de commande (105) pour commander le premier ensemble automatisé (M1), le premier ensemble automatisé (M1) comprenant :
une première interface homme-machine (130a) associée et juxtaposée au premier ensemble automatisé (M1) et reliée à l'unité de commande (105) par l'intermédiaire d'un réseau de communication (34c) pour au moins l'une de la fourniture d'informations à celui-ci et de la réception d'informations de celui-ci, la première interface homme-machine (130a) comprenant un premier récepteur sans fil (35) pour recevoir des signaux sans fil de l'au moins un dispositif d'information sans fil portable (30) ; et
un processeur (171) pour recevoir des signaux du premier récepteur sans fil (35), lesdits signaux dépendant des signaux sans fil reçus par le premier récepteur sans fil (35), et exécutant un logiciel de détermination de localisation pour déterminer la localisation de l'au moins un dispositif d'information sans fil portable (30) en fonction de l'intensité des signaux ou du temps de propagation des signaux reçus par le premier récepteur sans fil (35).

2. Ensemble selon la revendication 1, dans lequel l'environnement automatisé (10) comprend en outre au moins un second ensemble automatisé (M2) commandé par l'unité de commande (105) et dans lequel le second ensemble automatisé (M2) comprend en outre une seconde interface homme-machine (130b) associée et juxtaposée au second ensemble automatisé (M2) et reliée à l'unité de commande (105) pour au moins l'une de la fourniture d'informations à celui-ci et de la réception d'informations de celui-ci, la seconde interface homme-machine (130b) comprenant un second récepteur sans fil (35) pour recevoir des signaux sans fil de l'au moins un dispositif d'information sans fil portable (30), le processeur recevant des signaux de chacun des premier et second récepteurs sans fil (35), lesdits signaux dépendant des signaux sans fil reçus par les premier et second récepteurs sans fil (35), et déterminant la localisation du dispositif d'information sans fil portable en fonction de l'intensité des signaux ou du temps de propagation des signaux reçus par les premier et second récepteurs sans fil (35).

3. Ensemble selon la revendication 2, dans lequel le processeur (171) est intégré à la première interface homme-machine (130a).
